# EUROPÄISCHE PATENTANMELDUNG

(11) **EP 4 629 108 A1**
(43) Veröffentlichungstag der Anmeldung: **08.10.2025**
(21) Anmeldenummer: 24168803.5
(22) Anmeldetag: 05.04.2024
(51) Int. Cl.: G06F 18/214, G06V 10/764, G06V 10/774, G06V 30/19

(54) **ERMITTELN DER DOMÄNENZUGEHÖRIGKEIT VON BILDERN ANHAND VORGEGEBENER ATTRIBUTE**

(71) Anmelder: Robert Bosch GmbH, 70442 Stuttgart (DE)
(72) Erfinder: Wieland, Michele, 8050 Zürich (CH); Metzen, Jan Hendrik, 71034 Boeblingen (DE)

(57) **Zusammenfassung**

Verfahren (100) zum Ermitteln einer Domäne und/oder Verteilung (2), der ein Bild (1) angehört, mit den Schritten:
• es wird ein vorgegebener Katalog (4) von Attributen (5) bereitgestellt (110), bezüglich derer ein Bild (1) unterschiedliche Werte (6) annehmen kann, wobei
∘ dieser Katalog (4) von Attributen (5) sich auf eine übergeordnete Domäne und/oder Verteilung (3) von Bildern (1) bezieht und
∘ Kombinationen von Werten (6) der Attribute (5) eine Zugehörigkeit des Bildes zu Sub-Domänen bzw. Sub-Verteilungen (2) der übergeordneten Domäne bzw. Verteilung (3) anzeigen;

• das Bild (1) wird einem oder mehreren trainierten Machine Learning-Modellen (7) als Eingabe zugeführt (120);
• aus den daraufhin von dem einen oder den mehreren trainierten Machine Learning-Modellen (7) gelieferten Ausgaben (7a) werden die Werte (6) der Attribute (5) aus dem Katalog (4) für das Bild (1) ermittelt (130); und
• anhand dieser Werte (6) der Attribute (5) wird die Zugehörigkeit des Bildes (1) zu einer Sub-Domäne bzw. Sub-Verteilung (2) der übergeordneten Domäne und/oder Verteilung (3) ermittelt (140).

## Beschreibung

Die vorliegende Erfindung betrifft die Analyse von Bildern dahingehend, inwieweit sie als Trainings-Beispiele für das Training von Machine Learning-Modellen brauchbar sind, bzw. inwieweit sie in die Domäne fallen, auf der ein Machine Learning-Modell trainiert wurde.

### Stand der Technik

Für die Analyse von Bildern von Verkehrssituationen im Rahmen des zumindest teilweise automatisierten Führens von Fahrzeugen und Robotern im Verkehr werden trainierte Machine Learning-Modelle, wie beispielsweise neuronale Netzwerke, eingesetzt. Diese Machine Learning-Modelle werden auf einer großen Menge von Trainings-Beispielen trainiert. Nach dem Training ist das Machine Learning-Modell in der Lage, auch auf im Training ungesehene Bilder zu generalisieren und diese im Hinblick auf eine vorgegebene Aufgabe (Task) zutreffend auszuwerten.

Diese Fähigkeit zur Generalisierung ist auf derjenigen Domäne und/oder Verteilung, der die Trainings-Beispiele angehören, am stärksten ausgeprägt. Für die Anwendung von Machine Learning-Modellen, insbesondere wenn diese wie das automatisierte Fahren sicherheitskritisch ist, ist es daher wichtig, dass die Domäne und/oder Verteilung der Trainings-Beispiele hinreichend zu der Domäne und/oder Verteilung der in der späteren Anwendung real vorkommenden Bilder passt.

Daher wird die Domäne und/oder Verteilung von Daten, auf der ein Machine Learning-Modell zu funktionieren ausgelegt ist, für viele Anwendungen ausdrücklich in einer Domänen-Beschreibung (operational design domain, ODD) formuliert. Diese ODD kann als Pflichten heft von Dimensionen der Variabilität verstanden werden, entlang derer das Machine Learning-Modell einwandfrei funktionieren muss. So wird beispielsweise beim automatisierten Fahren erwartet, dass dies zu jeder Tageszeit, zu jeder Jahreszeit und bei jedem realistisch zu erwartenden Wetter funktioniert. Die Erstellung einer ODD ist bislang ein hauptsächlich manueller Prozess.

### Offenbarung der Erfindung

Die Erfindung stellt ein Verfahren zum Ermitteln einer Domäne und/oder Verteilung, der ein Bild angehört, bereit. Dieses Verfahren geht davon aus, dass
- zumindest eine übergeordnete Domäne und/oder Verteilung bekannt ist, zu der das Bild gehört, und
- es innerhalb dieser übergeordnete Domäne und/oder Verteilung Sub-Domänen bzw. Sub-Verteilungen gibt, wobei die Zugehörigkeit zu solchen Sub-Domänen bzw. Sub-Verteilungen sich anhand bestimmter Attribute festmachen lässt. Diese Attribute repräsentieren die besagten Dimensionen der Variabilität.

Die übergeordnete Domäne und/oder Verteilung kann insbesondere beispielsweise Bilder von Verkehrssituationen mit Verkehrsteilnehmern, die sich auf einem oder mehreren Verkehrswegen bewegen, umfassen. Die Attribute, die die Zugehörigkeit zu Sub-Domänen bzw. Sub-Verteilungen anzeigen, können insbesondere beispielsweise zu einer oder mehreren der folgenden Kategorien gehören:
- Physische Infrastruktur: Hierunter fallen insbesondere beispielsweise
   ∘ Typ und Belag einer Straße (etwa asphaltierte Straße, betonierte Straße, Schotterpiste oder Kopfsteinpflaster);
   ∘ die Anzahl der Fahrspuren in einer bestimmten Fahrtrichtung sowie die Breite dieser Fahrspuren;
   ∘ Fahrbahnmarkierungen; sowie
   ∘ Verkehrszeichen.
- Verkehrs- und Nutzungsbeschränkungen: Hierunter fallen insbesondere beispielsweise
   ∘ Geschwindigkeitsbeschränkungen;
   ∘ Tonnagebeschränkungen;
   ∘ Beschränkungen hinsichtlich der Benutzung von Fahrspuren (etwa Überholverbote);
   ∘ Einrichtungen zur Verkehrsregelung, wie etwa Ampeln; sowie
   ∘ Baustellen.
- Objekte im Verkehrsraum: Hierunter fallen insbesondere beispielsweise
   ∘ andere Fahrzeuge sowie sonstige Verkehrsteilnehmer (etwa Fußgänger);
   ∘ physische Barrieren (wie etwa Leitplanken), die die Fahrbahn begrenzen;
   ∘ temporär aufgestellte Verkehrsleitkegel; sowie
   ∘ Vegetation am Straßenrand.
- Umgebungsbedingungen: Hierunter fallen insbesondere beispielsweise
   ∘ das Wetter;
   ∘ die Temperatur;
   ∘ die Sichtverhältnisse;
   ∘ die Beschaffenheit der Fahrbahnoberfläche; sowie
   ∘ die Tageszeit.

Daher wird im Rahmen des Verfahrens ein vorgegebener Katalog von Attributen bereitgestellt, bezüglich derer ein Bild unterschiedliche Werte annehmen kann. Dieser Katalog von Attributen bezieht sich auf eine übergeordnete Domäne und/oder Verteilung von Bildern. Kombinationen von Werten dieser Attribute zeigen eine Zugehörigkeit des Bildes zu Sub-Domänen bzw. Sub-Verteilungen der übergeordneten Domäne bzw. Verteilung an.

Das Bild wird einem oder mehreren trainierten Machine Learning-Modellen als Eingabe zugeführt. Daraufhin liefern das eine oder die mehreren trainierten Machine Learning-Modelle jeweils Ausgaben. Aus den Ausgaben werden die Werte der Attribute in Bezug auf das untersuchte Bild ermittelt. Anhand dieser Werte der Attribute wird die Zugehörigkeit des Bildes zu einer Sub-Domäne bzw. Sub-Verteilung der übergeordneten Domäne und/oder Verteilung ermittelt.

Sind zu dem Zeitpunkt, zu dem das Bild untersucht wird, bereits konkrete Sub-Domänen bzw. Sub-Verteilungen bekannt, so kann anhand der Ausgaben des einen Machine Learning-Modells, bzw. der mehreren Machine Learning-Modelle, insbesondere beispielsweise geprüft werden, ob das Bild in eine dieser Sub-Domänen bzw. Sub-Verteilungen passt.

Alternativ oder auch in Kombination hierzu können beispielsweise die für eine Vielzahl von Bildern gelieferten Ausgaben des Machine Learning-Modells, bzw. der Machine Learning-Modelle, eine Aufteilung dieser Vielzahl von Bildern in Sub-Domänen bzw. Sub-Verteilungen festlegen. Beispielsweise können die Bilder in einem Raum, der durch die verschiedenen Attribute aufgespannt wird, einen oder mehrere Cluster bilden. Ein Bild kann also in diesem vieldimensionalen Raum als Punkt dargestellt werden, dessen Koordinaten durch die Werte seiner Attribute gegeben sind, also etwa "Asphaltierte Autobahn mit zwei Fahrspuren je Fahrtrichtung und weißen Fahrbahnbegrenzung, mit Leitplanken rechts und links".

Es wurde erkannt, dass die Vorgabe des Katalogs von Attributen es ermöglicht, die Attribute anschließend einzeln am untersuchten Bild zu prüfen. Die komplexe Aufgabe, die Zugehörigkeit des Bildes zu einer Sub-Domäne bzw. Sub-Verteilung zu prüfen, lässt sich somit in viele Teilaufgaben zerlegen, die von einem oder mehreren Machine Learning-Modellen ausgeführt werden können.

In einem einfachen Beispiel kann etwa mit einem ersten Bildklassifikator geprüft werden, welche Art von Straße in einem Bild dargestellt ist. Mit einem Regressor kann geprüft werden, wie viele Fahrspuren je Richtung die Straße hat. Ein oder mehrere weitere Bildklassifikatoren können beispielsweise andere Fahrzeuge oder Verkehrszeichen nach Typen klassifizieren.

In einer besonders vorteilhaften Ausgestaltung wird ein generatives Machine Learning-Modell, das dazu ausgebildet ist,
- das Bild sowie mindestens ein Attribut als Eingaben entgegenzunehmen und
- zu einer Ausgabe zu verarbeiten, die mindestens einen Wert des mindestens einen Attributs angibt,
als mindestens ein trainiertes Machine Learning-Modell gewählt. Auf diese Weise kann ein und dasselbe trainierte Machine Learning-Modell dazu verwendet werden, eine Vielzahl von Attributen in einem Bild zu bestimmen. Beispielsweise kann das von L. Haotian et al., in den Artikeln arXiv:2310.03744 und arXiv:2304.08485 beschriebene "Large Language and Vision Assistant"-Modell (kurz: LLaVA-Modell) verwendet werden. Für viele Anwendungen kann das generische Training dieses Modells ohne domänen-spezifisches Finetuning bereits ausreichen.

In einer weiteren besonders vorteilhaften Ausgestaltung werden einem generativen Machine Learning-Modell Informationen über die übergeordnete Domäne und/oder Verteilung von Bildern zugeführt. Der vorgegebene Katalog von Attributen wird unter Heranziehung der daraufhin vom generativen Machine Learning-Modell gelieferten Ausgabe erstellt. Dies bietet eine Möglichkeit, den vorgegebenen Katalog basierend auf nur wenigen Vorgaben, oder sogar ganz ohne Vorgaben, automatisch zu erstellen.

Die Information über die übergeordnete Domäne und/oder Verteilung kann insbesondere beispielsweise textlicher Natur sein. Dann lässt sich beispielsweise das sehr breite Wissen eines Large Language Models (LLM) nutzen, um zu ermitteln, wie die übergeordnete Domäne und/oder Verteilung der Bilder in Sub-Domänen und/oder Sub-Verteilungen strukturiert werden kann. Es kann aber auch beispielsweise eine Menge von Bildern, die der übergeordneten Domäne und/oder Verteilung angehören und sich insbesondere über mehrere Sub-Domänen bzw. Sub-Verteilungen erstrecken, einem Machine Learning-Modell zugeführt werden, das auch Bilder verarbeiten kann. Beispielsweise kann hierfür das gleiche LLaVA-Modell genutzt werden, das auch zur Bestimmung von Werten der Attribute genutzt wird.

In einer weiteren besonders vorteilhaften Ausgestaltung umfassen die textlichen Informationen
- Beschreibungen von Bildern, die der übergeordneten Domäne und/oder Verteilung angehören; und/oder
- Lehrbücher oder sonstiges Allgemeinwissen über die übergeordnete Domäne und/oder Verteilung, und/oder
- technische Dokumentationen über Geräte, bei denen die Darstellung des Betriebes in Bildern zu der übergeordneten Domäne und/oder Verteilung gehört bzw. gehören würde; und/oder
- Presseberichte über Vorkommnisse, deren Darstellung in Bildern zu der übergeordneten Domäne und/oder Verteilung gehört bzw. gehören würde.

Aus diesen Quellen lässt sich besonders gut erschließen, welche Attribute und welche möglichen Werte der Attribute benötigt werden, um die übergeordnete Domäne und/oder Verteilung, sowie mögliche Sub-Domänen bzw. Sub-Verteilungen, gut zu umreißen. So geht beispielsweise aus Allgemeinwissen über die übergeordnete Domäne und/oder Verteilung besonders gut hervor, welche Sub-Domänen bzw. Sub-Verteilungen sinnvoll sind. Im Beispiel der Verkehrssituationen enthalten beispielsweise Gesetzestexte oder Lehrbücher für den Erwerb der Fahrerlaubnis Informationen über die Unterteilung von Straßen oder auch Fahrzeugen in bestimmte Klassen.

Beschreibungen von Bildern, beispielsweise in Form von Bildunterschriften, sind ein besonders effizienter Weg, die wesentliche in den Bildern enthaltene Information einzubringen, ohne das komplette Bild verarbeiten zu müssen.

Technische Dokumentationen über Geräte sind insoweit relevant, als es eine Verbindung zu Bildern der übergeordneten Domäne und/oder Verteilung gibt. Ein Gerät hat insbesondere dann eine Verbindung zu diesen Bildern, wenn die Darstellung des Betriebes dieses Geräts zu der übergeordneten Domäne und/oder Verteilung gehört bzw. gehören würde. Hierbei steckt in der Formulierung "gehören würde", dass eine solche bildliche Darstellung nicht tatsächlich existieren muss. Die technische Dokumentation ist also etwa auch dann relevant, wenn sie selbst gar nicht mit Darstellungen des Betriebes des Geräts bebildert ist.

Presseberichte über Vorkommnisse sind insbesondere relevant, um Attribute und Werte dieser Attribute zu erkunden, die in der Realität nur selten vorkommen.

Gerade ungewöhnliche Vorkommnisse sind überproportional häufig in Presseberichten vertreten. So kommt es beispielsweise zum Glück nicht sehr oft vor, dass alle drei Fahrspuren einer Autobahn mit Speiseöl, einer Mischung aus Fruchtsaft und Glasscherben oder einer sonstigen nur mühsam abzureinigenden ehemaligen Ladung eines LKW bedeckt sind. Wenn dies aber passiert, ist es wegen der stundenlangen Wartezeit für alle Gekniffenen im Stau dahinter spektakulär und eine Pressemitteilung wert. Werden diese Pressemitteilungen analysiert, folgt hieraus, dass etwa eine Sub-Domäne oder Sub-Verteilung von Bildern mit unüberwindlichen Verkehrshindernissen auch verlorene Ladungen umfassen kann und worum es sich bei diesen verlorenen Ladungen im Einzelfall handeln kann. Auch hier ist eine Pressemitteilung dann relevant, wenn ihre bildliche Darstellung in die übergeordnete Domäne und/oder Verteilung passt, auch wenn es eine solche bildliche Darstellung tatsächlich (noch) nicht gibt.

In einer weiteren besonders vorteilhaften Ausgestaltung werden dem generativen Machine Learning-Modell zusätzlich eine oder mehrere Kategorien gesuchter Attribute zugeführt. Auf diese Weise lässt sich der Katalog der Attribute vorstrukturieren. Insbesondere lässt sich auf diese Weise Vorwissen der Art, worin sich Sub-Domänen bzw. Sub-Verteilungen der übergeordneten Domäne bzw. Verteilung voneinander unterscheiden könnten, einbringen. Im Beispiel der Bilder von Verkehrssituationen als übergeordnete Domäne und/oder Verteilung lassen sich etwa
- physische Infrastruktur,
- Verkehrs- und Nutzungsbeschränkungen,
- Objekte im Verkehrsraum und
- Umgebungsbedingungen
als Kategorien vorgeben.

In einer weiteren besonders vorteilhaften Ausgestaltung werden für eine vorgegebene Menge von Bildern jeweils Werte der im vorgegebenen Katalog genannten Attribute ermittelt. Die für alle Bilder gesammelten Werte der Attribute werden zu einer Domänen-Beschreibung der Sub-Domäne bzw. Sub-Verteilung der übergeordneten Domäne und/oder Verteilung, zu der die Bilder gehören, zusammengefasst. Es wird also davon ausgegangen, dass die Sub-Domäne bzw. Sub-Verteilung gerade durch die vorgegebene Menge von Bildern definiert wird, und mit der Domänen-Beschreibung wird eine textliche Beschreibung dieser Sub-Domäne bzw. Sub-Verteilung erhalten. Anhand dieser textlichen und zugleich wegen der Strukturierung in Attribute und zugehörige Werte (etwa in JSON-Notation) maschinell auswertbaren Domänen-Beschreibung lässt sich beispielsweise besonders gut prüfen, ob ein neues Bild zu dieser Sub-Domäne bzw. Sub-Verteilung gehört oder nicht.

Daher werden in einer weiteren besonders vorteilhaften Ausgestaltung für ein neues Bild ermittelte Werte von Attributen mit der Domänen-Beschreibung verglichen. Aus dem Ergebnis dieses Vergleichs wird ermittelt, inwieweit das neue Bild der Sub-Domäne bzw. Sub-Verteilung angehört. Ein Vergleich auf der Abstraktionsebene von Attributen und zugehörigen Werten ist deutlich transparenter als ein direkter Vergleich des neuen Bildes einerseits mit den Bildern aus der vorgegebenen Menge, die die Sub-Domäne bzw. Sub-Verteilung definieren, andererseits.

Wie eingangs erläutert, findet die Auswertung von Bildern häufig unter der Voraussetzung statt, dass das Bild einer bestimmten Domäne und/oder Verteilung angehört. So wird beispielsweise bei der Auswertung von Bildern mit trainierten Machine Learning-Modellen vorausgesetzt, dass das trainierte Machine Learning-Modell hinreichend gut auf das Bild generalisiert. Dies wiederum ist umso mehr der Fall, je mehr das Bild der Domäne und/oder Verteilung der beim Training des Machine Learning-Modells verwendeten Trainings-Beispiele angehört. Wenn festgestellt wird, dass das neue Bild zu der für das Training verwendeten Sub-Domäne bzw. Sub-Verteilung gehört, wird somit die vom Machine Learning-Modell für dieses Bild gelieferte Aussage belastbarer. Auch bei anderen Arten der Bildauswertung kann eine Nicht-Zugehörigkeit des Bildes zu einer bestimmten Sub-Domäne bzw. Sub-Verteilung anzeigen, dass das Bild zum gesuchten Thema keine Information enthält.

Daher wird in einer weiteren besonders vorteilhaften Ausgestaltung in Antwort darauf, dass das neue Bild im Hinblick auf mindestens ein Attribut nicht zu der Sub-Domäne bzw. Sub-Verteilung gehört, dieses neue Bild von einer nachgeschalteten Auswertung mindestens im Hinblick auf dieses Attribut ausgeschlossen.

In einer weiteren besonders vorteilhaften Ausgestaltung wird die Domänen-Beschreibung mit einer Soll-Beschreibung einer vorgegebenen Sub-Domäne bzw. Sub-Verteilung, in der eine weitere Auswertung der Bilder beabsichtigt ist, verglichen. Insofern sich bei diesem Vergleich Abweichungen ergeben, kann die Menge der Bilder, oder auch die Soll-Beschreibung, entsprechend angepasst werden.

So können in Antwort darauf, dass Werte von Attributen oder komplette Attribute aus der Soll-Beschreibung in der Domänen-Beschreibung fehlen, der vorgegebenen Menge von Bildern weitere Bilder hinzugefügt werden, deren Verarbeitung mit dem einen oder den mehreren trainierten Machine Learning-Modellen voraussichtlich auf Werte dieser Attribute führt.

Wenn also beispielsweise die Soll-Beschreibung für Verkehrssituationen, in denen ein Fahrassistenzsystem funktionieren soll, auch die Fahrbahntypen "Schotterstraße" und "Kopfsteinpfläster" enthält, kann geprüft werden, ob diese Fahrbahntypen im beabsichtigten Anwendungsbereich des Fahrassistenzsystems vorkommen. Wenn das Fahrassistenzsystem lediglich für die Autobahn gedacht ist, können die Fahrbahntypen "Schotterstraße" und "Kopfsteinpfläster" einfach aus der Soll-Beschreibung gestrichen werden. Das System ist dann einfach offiziell nicht mehr dafür ausgelegt, auf Autobahnen zu funktionieren, die nur als Schotterstraßen ausgebaut sind oder Kopfsteinpflaster haben. Wenn das Fahrassistenzsystem hingegen auch für den Betrieb innerorts gedacht ist, muss es auch mit Schotterstraßen und Kopfsteinpflaster zurechtkommen. Es werden dann also weitere Trainingsbilder mit Schotterstraßen und Kopfsteinpflaster benötigt.

Umgekehrt kann sich anhand der Bilder in der vorgegebenen Menge herausstellen, dass in der Realität auch Attribute oder Werte hiervon vorkommen, die in der Soll-Beschreibung fehlen. Beispielsweise können zum innerörtlichen Straßenbild auch Elektrokleinstfahrzeuge (E-Scooter) gehören, an die beim Abfassen der Soll-Beschreibung nicht gedacht wurde. Es ist jedoch wichtig, dass ein Fahrassistenzsystem für den innerörtlichen Verkehr auch auf diese Fahrzeuge richtig reagiert. Daher können sie der Soll-Beschreibung nachträglich hinzugefügt werden.

Wie zuvor erläutert, ist die Zugehörigkeit von Bildern zu Sub-Domänen bzw. Sub-Verteilungen insbesondere im Zusammenhang mit dem Training von Machine Learning-Modellen und deren späterer Fähigkeit zur Generalisierung relevant.

Daher wird in einer weiteren besonders vorteilhaften Ausgestaltung ein weiteres trainierbares Machine Learning-Modell unter Nutzung mindestens der vorgegebenen Menge von Bildern als Trainings-Beispiele trainiert. Da dieses weitere Machine Learning-Modell in der Regel auf eine konkrete Aufgabe (Task) trainiert wird, kann es auch als Task-Modell bezeichnet werden.

Es können dann insbesondere beispielsweise diesem trainierten Task-Modell Eingabe-Bilder zugeführt werden, die mit mindestens einem Sensor aufgenommen wurden. Aus der daraufhin von dem trainierten weiteren Machine Learning-Modell gelieferten Ausgabe kann ein Ansteuersignal ermittelt werden. Ein Fahrzeug, ein Fahrassistenzsystem, ein Roboter, ein System zur Qualitätskontrolle, ein System zur Überwachung von Bereichen, und/oder ein System zur medizinischen Bildgebung, kann dann mit dem Ansteuersignal angesteuert werden. Indem die Sub-Domäne bzw. Sub-Verteilung der für das Training verwendeten Bilder besser zu den später in der Realität vorkommenden Eingabe-Bildern passt, generalisiert das trainierte Task-Netzwerk besser auf diese Eingabe-Bilder. Dadurch ist die Wahrscheinlichkeit, dass die Reaktion des jeweils angesteuerten technischen Systems auf das Ansteuersignal der in den Eingabe-Bildern verkörperten Situation angemessen ist, vorteilhaft erhöht.

Der vorgegebene Katalog von Attributen kann in einer weiteren besonders vorteilhaften Ausgestaltung zusätzlich zu den Attributen selbst auch mögliche Werte dieser Attribute enthalten. Auf diese Weise kann die Suche nach diesen Werten in dem Bild von vornherein auf sinnvolle Werte eingeschränkt werden. Zugleich können die Werte so über viele Bilder vereinheitlicht werden. So gibt es beispielsweise mehrere Möglichkeiten, wie man eine asphaltierte Straße nennen kann. Für die weitere Auswertung kann es aber besser sein, diese Möglichkeiten auf eine einzige zu konsolidieren.

Es kann insbesondere beispielsweise die Soll-Beschreibung anhand der im Katalog enthaltenen Werte von Attributen ermittelt werden. Auf diese Weise kann eine gute Abdeckung der übergeordneten Domäne und/oder Verteilung durch Sub-Domänen bzw. Sub-Verteilungen erreicht werden.

Generell kann ein Bild in Antwort darauf, dass die ermittelte Zugehörigkeit des Bildes zu einer Sub-Domäne bzw. Sub-Verteilung der übergeordneten Domäne und/oder Verteilung ein vorgegebenes Kriterium erfüllt, einem weiteren trainierten Machine Learning-Modell zugeführt werden. Aus der daraufhin von dem weiteren trainierten Machine Learning-Modell gelieferten Ausgabe kann ein Ansteuersignal ermittelt werden. Es kann dann ein Fahrzeug, ein Fahrassistenzsystem, ein Roboter, ein System zur Qualitätskontrolle, ein System zur Überwachung von Bereichen, und/oder ein System zur medizinischen Bildgebung, mit dem Ansteuersignal angesteuert werden. Wie zuvor beschrieben, ist dann die Wahrscheinlichkeit, dass die Reaktion des jeweils angesteuerten technischen Systems auf das Ansteuersignal der in dem Bild verkörperten Situation angemessen ist, vorteilhaft erhöht.

Das Verfahren kann insbesondere ganz oder teilweise computerimplementiert sein. Daher bezieht sich die Erfindung auch auf ein Computerprogramm mit maschinenlesbaren Anweisungen, die, wenn sie auf einem oder mehreren Computern und/oder Compute-Instanzen ausgeführt werden, den oder die Computer und/oder Compute-Instanzen dazu veranlassen, das beschriebene Verfahren auszuführen. In diesem Sinne sind auch Steuergeräte für Fahrzeuge und Embedded-Systeme für technische Geräte, die ebenfalls in der Lage sind, maschinenlesbare Anweisungen auszuführen, als Computer anzusehen. Compute-Instanzen können beispielsweise virtuelle Maschinen, Container oder serverlose Ausführungsumgebungen sein, die insbesondere in einer Cloud bereitgestellt werden können.

Ebenso bezieht sich die Erfindung auch auf einen maschinenlesbaren Datenträger und/oder auf ein Downloadprodukt mit dem Computerprogramm. Ein Downloadprodukt ist ein über ein Datennetzwerk übertragbares, d.h. von einem Benutzer des Datennetzwerks downloadbares, digitales Produkt, das beispielsweise in einem Online-Shop zum sofortigen Download feilgeboten werden kann.

Weiterhin können ein oder mehrere Computer und/oder Compute-Instanzen mit dem Computerprogramm, mit dem maschinenlesbaren Datenträger bzw. mit dem Downloadprodukt ausgerüstet sein.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel des Verfahrens 100 zum Ermitteln einer Domäne und/oder Verteilung 2, der ein Bild 1 angehört;
Figur 2 Beispielhafter Gang der Verarbeitung während des Verfahrens 100.

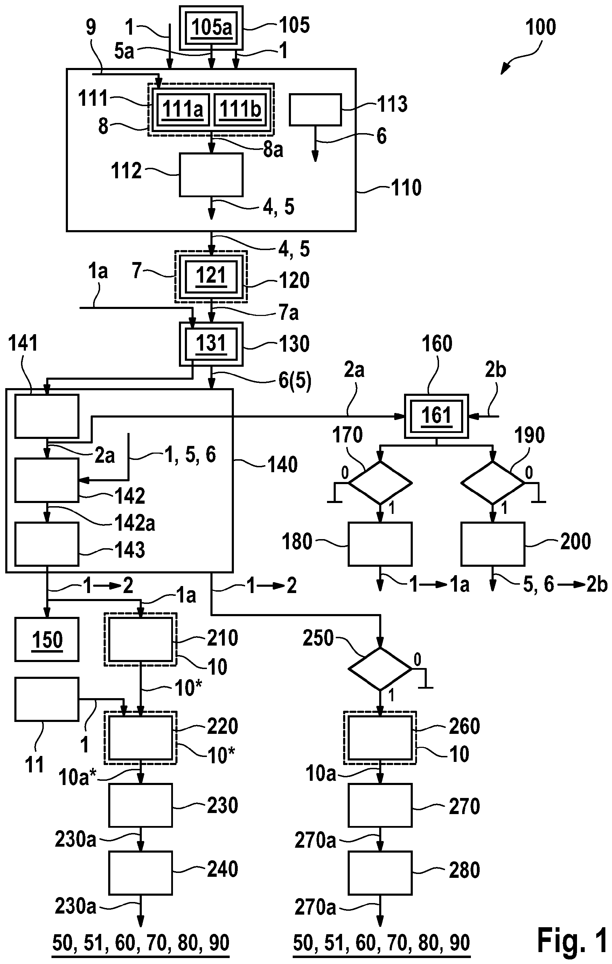

Figur 1 ist ein schematisches Ablaufdiagramm eines Ausführungsbeispiels des Verfahrens 100 zum Ermitteln einer Domäne und/oder Verteilung 2, der ein Bild 1 angehört. Im Einzelnen wird danach gefragt, welcher Sub-Domäne bzw. Sub-Verteilung 2 einer übergeordneten Domäne bzw. Verteilung 3 das Bild 1 angehört.

Gemäß Block 105 kann ein Bild 1 einer Verkehrssituation mit Verkehrsteilnehmern, die sich auf einem oder mehreren Verkehrswegen bewegen, gewählt werden.

In Schritt 110 wird ein vorgegebener Katalog 4 von Attributen 5, bezüglich derer ein Bild 1 unterschiedliche Werte 6 annehmen kann, bereitgestellt. Dieser Katalog 4 von Attributen 5 bezieht sich auf eine übergeordnete Domäne und/oder Verteilung 3 von Bildern 1. Kombinationen von Werten 6 der Attribute 5 zeigen eine Zugehörigkeit des Bildes zu Sub-Domänen bzw. Sub-Verteilungen 2 der übergeordneten Domäne bzw. Verteilung 3 an.

Insoweit es sich gemäß Block 105 um ein Bild 1 einer Verkehrssituation handelt, können beispielsweise gemäß Block 105a die Attribute 5 zu einer oder mehreren der folgenden Kategorien 5a gehören:
- physische Infrastruktur;
- Verkehrs- und Nutzungsbeschränkungen;
- Objekte im Verkehrsraum; und
- Umgebungsbedingungen.

Gemäß Block 111 können einem generativen Machine Learning-Modell 8 textliche Informationen 9 über die übergeordnete Domäne und/oder Verteilung 3 von Bildern 1 zugeführt werden. Der vorgegebene Katalog 4 von Attributen 5 kann dann unter Heranziehung der daraufhin vom generativen Machine Learning-Modell 8 gelieferten Ausgabe 8a erstellt werden.

Dabei können gemäß Block 111a die textlichen Informationen 9 insbesondere beispielsweise
- Beschreibungen von Bildern, die der übergeordneten Domäne und/oder Verteilung 3 angehören; und/oder
- Lehrbücher oder sonstiges Allgemeinwissen über die übergeordnete Domäne und/oder Verteilung 3; und/oder
- technische Dokumentationen über Geräte, bei denen die Darstellung des Betriebes in Bildern zu der übergeordneten Domäne und/oder Verteilung 3 gehört bzw. gehören würde; und/oder
- Presseberichte über Vorkommnisse, deren Darstellung in Bildern zu der übergeordneten Domäne und/oder Verteilung gehört bzw. gehören würde,
umfassen.

Weiterhin können gemäß Block 111b dem generativen Machine Learning-Modell 8 zusätzlich eine oder mehrere Kategorien 5a gesuchter Attribute 5 zugeführt werden.

Gemäß Block 113 kann der vorgegebene Katalog 4 von Attributen 5 zusätzlich zu den Attributen 5 selbst auch mögliche Werte 6 dieser Attribute 5 enthalten.

In Schritt 120 wird das Bild 1 wird einem oder mehreren trainierten Machine Learning-Modellen 7 als Eingabe zugeführt. Dabei entstehen Ausgaben 7a.

Gemäß Block 121 kann insbesondere beispielsweise ein generatives Machine Learning-Modell 7, das dazu ausgebildet ist,
- das Bild 1 sowie mindestens ein Attribut 5 als Eingaben entgegenzunehmen und
- zu einer Ausgabe 7a zu verarbeiten, die mindestens einen Wert 6 des mindestens einen Attributs 5 angibt,
als mindestens ein trainiertes Machine Learning-Modell 7 gewählt werden.

In Schritt 130 werden aus den Ausgaben 7a die Werte 6 der Attribute 5 aus dem Katalog 4 für das Bild 1 ermittelt.

Gemäß Block 131 können für eine vorgegebene Menge 1a von Bildern 1 jeweils Werte 6 der im vorgegebenen Katalog 4 genannten Attribute 5 ermittelt werden.

In Schritt 140 wird anhand der ermittelten Werte 6 der Attribute 5 die Zugehörigkeit des Bildes 1 zu einer Sub-Domäne bzw. Sub-Verteilung 2 der übergeordneten Domäne und/oder Verteilung 3 ermittelt.

Gemäß Block 141 können, insoweit es gemäß Block 131 eine Menge 1a von Bildern 1 gibt, die für alle Bilder 1 aus dieser Menge 1a gesammelten Werte 6 der Attribute 5 zu einer Domänen-Beschreibung 2a der Sub-Domäne bzw. Sub-Verteilung 2 der übergeordneten Domäne und/oder Verteilung 3, zu der die Bilder 1 gehören, zusammengefasst werden. Es können dann gemäß Block 142 für ein neues Bild 1 ermittelte Werte 6 von Attributen 5 mit der Domänen-Beschreibung 2a verglichen werden. Aus dem Ergebnis 142a dieses Vergleichs kann dann gemäß Block 143 ermittelt werden, inwieweit das neue Bild 1 der Sub-Domäne bzw. Sub-Verteilung 2 angehört.

Hierbei kann insbesondere beispielsweise in Schritt 160 die Domänen-Beschreibung 2a mit einer Soll-Beschreibung 2b einer vorgegebenen Sub-Domäne bzw. Sub-Verteilung 2, in der eine weitere Auswertung der Bilder 1 beabsichtigt ist, verglichen werden. Diese Soll-Beschreibung 2b kann insbesondere beispielsweise gemäß Block 161 anhand der im Katalog 4 enthaltenen Werte 6 von Attributen 5 ermittelt werden.

In Schritt 170 kann dann geprüft werden, ob Werte 6 von Attributen 5 oder komplette Attribute 5 aus der Soll-Beschreibung 2b in der Domänen-Beschreibung 2a fehlen. Wenn dies der Fall ist (Wahrheitswert 1), können in Schritt 180 der vorgegebenen Menge 1a von Bildern 1 weitere Bilder 1 hinzugefügt werden, deren Verarbeitung mit dem einen oder den mehreren trainierten Machine Learning-Modellen 7 voraussichtlich auf Werte 6 dieser Attribute 5 führt.

In Schritt 190 kann weiterhin geprüft werden, ob Werte 6 von Attributen 5 oder komplette Attribute 5 aus der Domänen-Beschreibung 2a in der Soll-Beschreibung 2b fehlen. Wenn dies der Fall ist (Wahrheitswert 1), können in Schritt 200 diese Werte 6 bzw. Attribute 5 der Soll-Beschreibung 2b hinzugefügt werden.

Insoweit sich herausstellt, dass das neue Bild 1 im Hinblick auf mindestens ein Attribut 5 nicht zu der Sub-Domäne bzw. Sub-Verteilung gehört 2, kann in Schritt 150 dieses neue Bild 1 von einer nachgeschalteten Auswertung mindestens im Hinblick auf dieses Attribut 5 ausgeschlossen werden.

In dem in Figur 1 gezeigten Beispiel wird in Schritt 210 ein weiteres trainierbares Machine Learning-Modell 10 unter Nutzung mindestens der vorgegebenen Menge 1a von Bildern 1 als Trainings-Beispiele trainiert. Dies ist das bereits angesprochene Task-Modell, das zur Lösung einer bestimmten Aufgabe (Task) mit den Bildern 1 ausgebildet ist. Der fertig trainierte Zustand dieses Task-Modells 10 ist mit dem Bezugszeichen 10* bezeichnet.

In Schritt 220 werden dem trainierten weiteren Machine Learning-Modell 10* Eingabe-Bilder 1 zugeführt, die mit mindestens einem Sensor 11 aufgenommen wurden. Das trainierte Task-Modell 10* liefert daraufhin Ausgaben 10a*. Aus diesen Ausgaben 10a* wird in Schritt 230 ein Ansteuersignal 230a ermittelt. In Schritt 240 wird dann ein Fahrzeug 50, ein Fahrassistenzsystem 51, ein Roboter 60, ein System 70 zur Qualitätskontrolle, ein System 80 zur Überwachung von Bereichen, und/oder ein System 90 zur medizinischen Bildgebung, mit dem Ansteuersignal 230a angesteuert.

Allgemein kann in Schritt 250 geprüft werden, ob die zuvor ermittelte Zugehörigkeit des Bildes 1 zu einer Sub-Domäne bzw. Sub-Verteilung 2 der übergeordneten Domäne und/oder Verteilung 3 ein vorgegebenes Kriterium erfüllt. Wenn dies der Fall ist (Wahrheitswert 1), kann das Bild 1 in Schritt 260 einem Task-Modell 10 zugeführt werden, wie auch immer dessen Trainingszustand sein mag. Es entsteht eine Ausgabe 10a. Aus dieser Ausgabe wird in Schritt 270 ein Ansteuersignal 270a ermittelt. In Schritt 280 wird dann ein Fahrzeug 50, ein Fahrassistenzsystem 51, ein Roboter 60, ein System 70 zur Qualitätskontrolle, ein System 80 zur Überwachung von Bereichen, und/oder ein System 90 zur medizinischen Bildgebung, mit dem Ansteuersignal 270a angesteuert.

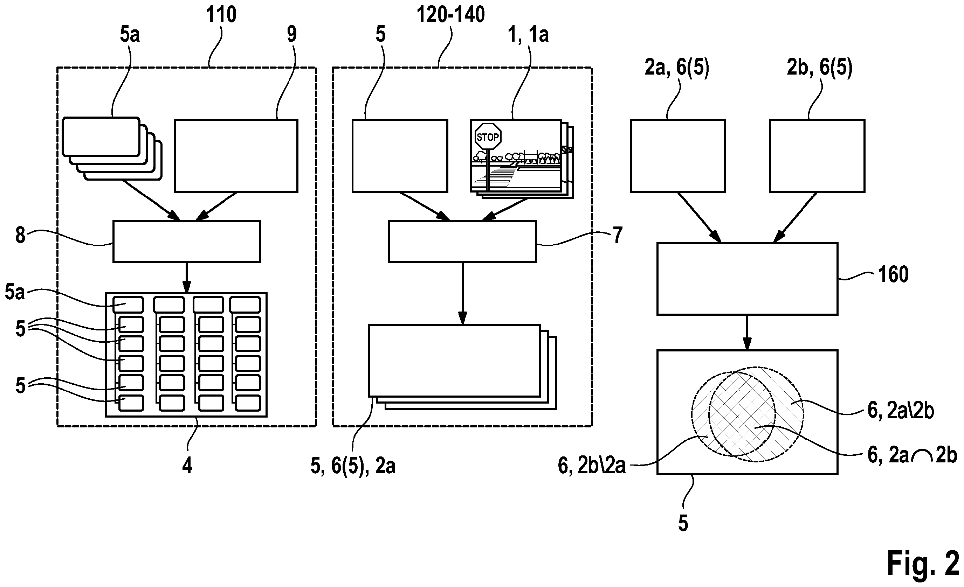

In Figur 2 ist ein beispielhafter Verarbeitungsgang im Rahmen des Verfahrens 100 veranschaulicht.

In Schritt 110 des Verfahrens 100 wird ein Large Language Model, LLM, hier: GPT-4, als Machine Learning-Modell 8 mit textlichen Informationen 9 über die übergeordnete Domäne und/oder Verteilung 3 von Bildern 1, hier: Bildern 1 von Verkehrssituationen, versorgt und nach geeigneten Attributen 5 befragt. Hierbei werden auch die besagten Kategorien 5 gesuchter Attribute vorgegeben. Hierzu kann das LLM beispielsweise ausdrücklich angewiesen werden, die Domäne der Bilder 1 von Verkehrssituationen auf Autobahnen oder Landstraßen mit Attributen 5 aus den genannten Kategorien 5a zu beschreiben. Anschließend kann das LLM weiter nach den z.B. fünf wichtigsten Attributen 5 je Kategorie, oder auch nach einer endlichen Menge möglicher Werte 6 je Attribut 5, befragt werden. Das LLM kann es sogar übernehmen, die Attribute und zugehörigen Werte in ein JSON-Wörterbuch zu transformieren.

In den Schritten 120 bis 140 werden die Werte 6 der Attribute 5 aus den Bildern 1 in der Menge 1a extrahiert. Hierzu werden die Attribute 5 gemeinsam mit den Bildern 1 einem generativen Machine Learning-Modell 7, hier: LLaVA, zugeführt. In dessen Ausgabe 7 sind die Werte 6 der Attribute 5 enthalten. Das Machine Learning-Modell 7 wird in dem in Figur 2 gezeigten Beispiel mit einer einzigen Anfrage nach den Werten 6 aller Attribute 5 auf einmal befragt. Es ist jedoch auch möglich, jedes Attribut einzeln abzufragen. Die Aufgabe für das Machine Learning-Modell 7 wird dann etwas einfacher. Jedoch kann die Bearbeitung aller Anfragen insgesamt länger dauern, und es kann überlappende Antworten auf die verschiedenen Anfragen geben.

In dem in Figur 2 gezeigten Beispiel werden die Werte 6 aller Attribute 5 in einer Domänen-Beschreibung 2a zusammengefasst. Diese Domänen-Beschreibung 2a wird in Schritt 160 des Verfahrens 100 mit einer Soll-Beschreibung 2b verglichen. Es gibt dann:
- Werte 6, 2a ∩ 2b, die sowohl in der Domänen-Beschreibung 2a als auch in der Soll-Beschreibung 2b vorkommen;
- Werte 6, 2a \ 2b, die nur in der Domänen-Beschreibung 2a, nicht jedoch in der Soll-Beschreibung 2b vorkommen; sowie
- Werte 6, 2b \ 2a, die nur in der Soll-Beschreibung 2b, nicht jedoch in der Domänen-Beschreibung 2a vorkommen.

Es kann nun beispielsweise die Vereinigungsmenge aller in der Domänen-Beschreibung 2a vorkommenden Werte 6 einerseits und in der Soll-Beschreibung 2b vorkommenden Werte 6 andererseits gebildet werden, um zu einer neuen Domänen-Beschreibung 2a zu kommen, die alle Bilder 1 aus der Menge 1a abdeckt.

## Patentansprüche

1. Verfahren (100) zum Ermitteln einer Domäne und/oder Verteilung (2), der ein Bild (1) angehört, mit den Schritten:
• es wird ein vorgegebener Katalog (4) von Attributen (5) bereitgestellt (110), bezüglich derer ein Bild (1) unterschiedliche Werte (6) annehmen kann, wobei
∘ dieser Katalog (4) von Attributen (5) sich auf eine übergeordnete Domäne und/oder Verteilung (3) von Bildern (1) bezieht und
∘ Kombinationen von Werten (6) der Attribute (5) eine Zugehörigkeit des Bildes zu Sub-Domänen bzw. Sub-Verteilungen (2) der übergeordneten Domäne bzw. Verteilung (3) anzeigen;
• das Bild (1) wird einem oder mehreren trainierten Machine Learning-Modellen (7) als Eingabe zugeführt (120);
• aus den daraufhin von dem einen oder den mehreren trainierten Machine Learning-Modellen (7) gelieferten Ausgaben (7a) werden die Werte (6) der Attribute (5) aus dem Katalog (4) für das Bild (1) ermittelt (130); und
• anhand dieser Werte (6) der Attribute (5) wird die Zugehörigkeit des Bildes (1) zu einer Sub-Domäne bzw. Sub-Verteilung (2) der übergeordneten Domäne und/oder Verteilung (3) ermittelt (140).

2. Verfahren (100) nach Anspruch 1, wobei ein generatives Machine Learning-Modell (7), das dazu ausgebildet ist,
• das Bild (1) sowie mindestens ein Attribut (5) als Eingaben entgegenzunehmen und
• zu einer Ausgabe (7a) zu verarbeiten, die mindestens einen Wert (6) des mindestens einen Attributs (5) angibt,
als mindestens ein trainiertes Machine Learning-Modell (7) gewählt wird (121).

3. Verfahren (100) nach einem der Ansprüche 1 bis 2, wobei
• einem generativen Machine Learning-Modell (8) textliche Informationen (9) über die übergeordnete Domäne und/oder Verteilung (3) von Bildern (1) zugeführt werden (111) und
• der vorgegebene Katalog (4) von Attributen (5) unter Heranziehung der daraufhin vom generativen Machine Learning-Modell (8) gelieferten Ausgabe (8a) erstellt wird (112).

4. Verfahren (100) nach Anspruch 3, wobei die textlichen Informationen (9)
• Beschreibungen von Bildern, die der übergeordneten Domäne und/oder Verteilung (3) angehören; und/oder
• Lehrbücher oder sonstiges Allgemeinwissen über die übergeordnete Domäne und/oder Verteilung (3); und/oder
• technische Dokumentationen über Geräte, bei denen die Darstellung des Betriebes in Bildern zu der übergeordneten Domäne und/oder Verteilung (3) gehört bzw. gehören würde; und/oder
• Presseberichte über Vorkommnisse, deren Darstellung in Bildern zu der übergeordneten Domäne und/oder Verteilung gehört bzw. gehören würde, umfassen (111a).

5. Verfahren (100) nach einem der Ansprüche 3 bis 4, wobei dem generativen Machine Learning-Modell (8) zusätzlich eine oder mehrere Kategorien (5a) gesuchter Attribute (5) zugeführt werden (111b).

6. Verfahren (100) nach einem der Ansprüche 1 bis 5, wobei
• für eine vorgegebene Menge (1a) von Bildern (1) jeweils Werte (6) der im vorgegebenen Katalog (4) genannten Attribute (5) ermittelt werden (131); und
• die für alle Bilder (1) gesammelten Werte (6) der Attribute (5) zu einer Domänen-Beschreibung (2a) der Sub-Domäne bzw. Sub-Verteilung (2) der übergeordneten Domäne und/oder Verteilung (3), zu der die Bilder (1) gehören, zusammengefasst werden (141).

7. Verfahren (100) nach Anspruch 6, wobei
• für ein neues Bild (1) ermittelte Werte (6) von Attributen (5) mit der Domänen-Beschreibung (2a) verglichen werden (142) und
• aus dem Ergebnis (142a) dieses Vergleichs ermittelt wird (143), inwieweit das neue Bild (1) der Sub-Domäne bzw. Sub-Verteilung (2) angehört.

8. Verfahren (100) nach Anspruch 7, wobei in Antwort darauf, dass das neue Bild (1) im Hinblick auf mindestens ein Attribut (5) nicht zu der Sub-Domäne bzw. Sub-Verteilung gehört (2), dieses neue Bild (1) von einer nachgeschalteten Auswertung mindestens im Hinblick auf dieses Attribut (5) ausgeschlossen wird (150).

9. Verfahren (100) nach einem der Ansprüche 6 bis 8, wobei
• die Domänen-Beschreibung (2a) mit einer Soll-Beschreibung (2b) einer vorgegebenen Sub-Domäne bzw. Sub-Verteilung (2), in der eine weitere Auswertung der Bilder (1) beabsichtigt ist, verglichen wird (160) und
• in Antwort darauf, dass Werte (6) von Attributen (5) oder komplette Attribute (5) aus der Soll-Beschreibung (2b) in der Domänen-Beschreibung (2a) fehlen (170), der vorgegebenen Menge (1a) von Bildern (1) weitere Bilder (1) hinzugefügt werden (180), deren Verarbeitung mit dem einen oder den mehreren trainierten Machine Learning-Modellen (7) voraussichtlich auf Werte (6) dieser Attribute (5) führt, und/oder
• in Antwort darauf, dass Werte (6) von Attributen (5) oder komplette Attribute (5) aus der Domänen-Beschreibung (2a) in der Soll-Beschreibung (2b) fehlen (190), diese Werte (6) bzw. Attribute (5) der Soll-Beschreibung (2b) hinzugefügt werden (200).

10. Verfahren (100) nach einem der Ansprüche 6 bis 9, wobei ein weiteres trainierbares Machine Learning-Modell (10) unter Nutzung mindestens der vorgegebenen Menge (1a) von Bildern (1) als Trainings-Beispiele trainiert wird (210).

11. Verfahren (100) nach Anspruch 10, wobei
• dem trainierten weiteren Machine Learning-Modell (10*) Eingabe-Bilder (1) zugeführt werden (220), die mit mindestens einem Sensor (11) aufgenommen wurden;
• aus der daraufhin von dem trainierten weiteren Machine Learning-Modell (10*) gelieferten Ausgabe (10a*) ein Ansteuersignal (230a) ermittelt wird (230); und
• ein Fahrzeug (50), ein Fahrassistenzsystem (51), ein Roboter (60), ein System (70) zur Qualitätskontrolle, ein System (80) zur Überwachung von Bereichen, und/oder ein System (90) zur medizinischen Bildgebung, mit dem Ansteuersignal (230a) angesteuert wird (240).

12. Verfahren (100) nach einem der Ansprüche 1 bis 11, wobei der vorgegebene Katalog (4) von Attributen (5) zusätzlich zu den Attributen (5) selbst auch mögliche Werte (6) dieser Attribute (5) enthält (113).

13. Verfahren (100) nach Anspruch 9 und 12, wobei die Soll-Beschreibung (2b) anhand der im Katalog (4) enthaltenen Werte (6) von Attributen (5) ermittelt wird (161).

14. Verfahren (100) nach einem der Ansprüche 1 bis 13, wobei
• das Bild (1) in Antwort darauf, dass die ermittelte Zugehörigkeit des Bildes (1) zu einer Sub-Domäne bzw. Sub-Verteilung (2) der übergeordneten Domäne und/oder Verteilung (3) ein vorgegebenes Kriterium erfüllt (250), einem weiteren trainierten Machine Learning-Modell (10) zugeführt wird (260);
• aus der daraufhin von dem weiteren trainierten Machine Learning-Modell (10) gelieferten Ausgabe (10a) ein Ansteuersignal (270a) ermittelt wird (270); und
• ein Fahrzeug (50), ein Fahrassistenzsystem (51), ein Roboter (60), ein System (70) zur Qualitätskontrolle, ein System (80) zur Überwachung von Bereichen, und/oder ein System (90) zur medizinischen Bildgebung, mit dem Ansteuersignal (270a) angesteuert wird (280).

15. Verfahren (100) nach einem der Ansprüche 1 bis 14, wobei ein Bild (1) einer Verkehrssituation mit Verkehrsteilnehmern, die sich auf einem oder mehreren Verkehrswegen bewegen, gewählt wird (105).

16. Verfahren (100) nach Anspruch 15, wobei die Attribute (5) zu einer oder mehreren der folgenden Kategorien (5a) gehören (105a):
• physische Infrastruktur;
• Verkehrs- und Nutzungsbeschränkungen;
• Objekte im Verkehrsraum; und
• Umgebungsbedingungen.

17. Computerprogramm, enthaltend maschinenlesbare Anweisungen, die, wenn sie auf einem oder mehreren Computern und/oder Compute-Instanzen ausgeführt werden, den oder die Computer und/oder Compute-Instanzen dazu veranlassen, das Verfahren (100) nach einem der Ansprüche 1 bis 16 auszuführen.

18. Maschinenlesbarer Datenträger und/oder Downloadprodukt mit dem Computerprogramm nach Anspruch 17.

19. Ein oder mehrere Computer und/oder Compute-Instanzen mit dem Computerprogramm nach Anspruch 17, und/oder mit dem maschinenlesbaren Datenträger und/oder Downloadprodukt nach Anspruch 18.

## Geänderte Patentansprüche

### Geänderte Patentansprüche gemäss Regel 137(2) EPÜ.

1. Verfahren (100) zum Ermitteln einer Domäne und/oder Verteilung (2), der ein Bild (1) angehört, mit den Schritten:
• es wird ein vorgegebener Katalog (4) von Attributen (5) bereitgestellt (110), bezüglich derer ein Bild (1) unterschiedliche Werte (6) annehmen kann, wobei
∘ dieser Katalog (4) von Attributen (5) sich auf eine übergeordnete Domäne und/oder Verteilung (3) von Bildern (1) bezieht und
∘ Kombinationen von Werten (6) mehrerer Attribute (5) eine Zugehörigkeit des Bildes zu Sub-Domänen bzw. Sub-Verteilungen (2) der übergeordneten Domäne bzw. Verteilung (3) anzeigen;
• das Bild (1) wird einem oder mehreren trainierten Machine Learning-Modellen (7) als Eingabe zugeführt (120);
• aus den daraufhin von dem einen oder den mehreren trainierten Machine Learning-Modellen (7) gelieferten Ausgaben (7a) werden die Werte (6) der Attribute (5) aus dem Katalog (4) für das Bild (1) ermittelt (130); und
• anhand dieser Werte (6) der Attribute (5) wird die Zugehörigkeit des Bildes (1) zu einer Sub-Domäne bzw. Sub-Verteilung (2) der übergeordneten Domäne und/oder Verteilung (3) ermittelt (140),
wobei
• für eine vorgegebene Menge (1a) von Bildern (1) jeweils Werte (6) der im vorgegebenen Katalog (4) genannten Attribute (5) ermittelt werden (131);
• die für alle Bilder (1) gesammelten Werte (6) der Attribute (5) zu einer Domänen-Beschreibung (2a) der Sub-Domäne bzw. Sub-Verteilung (2) der übergeordneten Domäne und/oder Verteilung (3), zu der die Bilder (1) gehören, zusammengefasst werden (141);
• für ein neues Bild (1) ermittelte Werte (6) von Attributen (5) mit der Domänen-Beschreibung (2a) verglichen werden (142) und
• aus dem Ergebnis (142a) dieses Vergleichs ermittelt wird (143), inwieweit das neue Bild (1) der Sub-Domäne bzw. Sub-Verteilung (2) angehört.

2. Verfahren (100) nach Anspruch 1, wobei ein generatives Machine Learning-Modell (7), das dazu ausgebildet ist,
• das Bild (1) sowie mindestens ein Attribut (5) als Eingaben entgegenzunehmen und
• zu einer Ausgabe (7a) zu verarbeiten, die mindestens einen Wert (6) des mindestens einen Attributs (5) angibt, als mindestens ein trainiertes Machine Learning-Modell (7) gewählt wird (121).

3. Verfahren (100) nach einem der Ansprüche 1 bis 2, wobei
• einem generativen Machine Learning-Modell (8) textliche Informationen (9) über die übergeordnete Domäne und/oder Verteilung (3) von Bildern (1) zugeführt werden (111) und
• der vorgegebene Katalog (4) von Attributen (5) unter Heranziehung der daraufhin vom generativen Machine Learning-Modell (8) gelieferten Ausgabe (8a) erstellt wird (112).

4. Verfahren (100) nach Anspruch 3, wobei die textlichen Informationen (9)
• Beschreibungen von Bildern, die der übergeordneten Domäne und/oder Verteilung (3) angehören; und/oder
• Lehrbücher oder sonstiges Allgemeinwissen über die übergeordnete Domäne und/oder Verteilung (3); und/oder
• technische Dokumentationen über Geräte, bei denen die Darstellung des Betriebes in Bildern zu der übergeordneten Domäne und/oder Verteilung (3) gehört bzw. gehören würde; und/oder
• Presseberichte über Vorkommnisse, deren Darstellung in Bildern zu der übergeordneten Domäne und/oder Verteilung gehört bzw. gehören würde, umfassen (111a).

5. Verfahren (100) nach einem der Ansprüche 3 bis 4, wobei dem generativen Machine Learning-Modell (8) zusätzlich eine oder mehrere Kategorien (5a) gesuchter Attribute (5) zugeführt werden (111b).

6. Verfahren (100) nach einem der Ansprüche 1 bis 5, wobei in Antwort darauf, dass das neue Bild (1) im Hinblick auf mindestens ein Attribut (5) nicht zu der Sub-Domäne bzw. Sub-Verteilung gehört (2), dieses neue Bild (1) von einer nachgeschalteten Auswertung mindestens im Hinblick auf dieses Attribut (5) ausgeschlossen wird (150).

7. Verfahren (100) nach einem der Ansprüche 1 bis 6, wobei
• die Domänen-Beschreibung (2a) mit einer Soll-Beschreibung (2b) einer vorgegebenen Sub-Domäne bzw. Sub-Verteilung (2), in der eine weitere Auswertung der Bilder (1) beabsichtigt ist, verglichen wird (160) und
• in Antwort darauf, dass Werte (6) von Attributen (5) oder komplette Attribute (5) aus der Soll-Beschreibung (2b) in der Domänen-Beschreibung (2a) fehlen (170), der vorgegebenen Menge (1a) von Bildern (1) weitere Bilder (1) hinzugefügt werden (180), deren Verarbeitung mit dem einen oder den mehreren trainierten Machine Learning-Modellen (7) voraussichtlich auf Werte (6) dieser Attribute (5) führt, und/oder
• in Antwort darauf, dass Werte (6) von Attributen (5) oder komplette Attribute (5) aus der Domänen-Beschreibung (2a) in der Soll-Beschreibung (2b) fehlen (190), diese Werte (6) bzw. Attribute (5) der Soll-Beschreibung (2b) hinzugefügt werden (200).

8. Verfahren (100) nach einem der Ansprüche 1 bis 7, wobei ein weiteres trainierbares Machine Learning-Modell (10) unter Nutzung mindestens der vorgegebenen Menge (1a) von Bildern (1) als Trainings-Beispiele trainiert wird (210).

9. Verfahren (100) nach Anspruch 8, wobei
• dem trainierten weiteren Machine Learning-Modell (10*) Eingabe-Bilder (1) zugeführt werden (220), die mit mindestens einem Sensor (11) aufgenommen wurden;
• aus der daraufhin von dem trainierten weiteren Machine Learning-Modell (10*) gelieferten Ausgabe (10a*) ein Ansteuersignal (230a) ermittelt wird (230); und
• ein Fahrzeug (50), ein Fahrassistenzsystem (51), ein Roboter (60), ein System (70) zur Qualitätskontrolle, ein System (80) zur Überwachung von Bereichen, und/oder ein System (90) zur medizinischen Bildgebung, mit dem Ansteuersignal (230a) angesteuert wird (240).

10. Verfahren (100) nach einem der Ansprüche 1 bis 9, wobei der vorgegebene Katalog (4) von Attributen (5) zusätzlich zu den Attributen (5) selbst auch mögliche Werte (6) dieser Attribute (5) enthält (113).

11. Verfahren (100) nach Anspruch 1 und 10, wobei die Soll-Beschreibung (2b) anhand der im Katalog (4) enthaltenen Werte (6) von Attributen (5) ermittelt wird (161).

12. Verfahren (100) nach einem der Ansprüche 1 bis 11, wobei
• das Bild (1) in Antwort darauf, dass die ermittelte Zugehörigkeit des Bildes (1) zu einer Sub-Domäne bzw. Sub-Verteilung (2) der übergeordneten Domäne und/oder Verteilung (3) ein vorgegebenes Kriterium erfüllt (250), einem weiteren trainierten Machine Learning-Modell (10) zugeführt wird (260);
• aus der daraufhin von dem weiteren trainierten Machine Learning-Modell (10) gelieferten Ausgabe (10a) ein Ansteuersignal (270a) ermittelt wird (270); und
• ein Fahrzeug (50), ein Fahrassistenzsystem (51), ein Roboter (60), ein System (70) zur Qualitätskontrolle, ein System (80) zur Überwachung von Bereichen, und/oder ein System (90) zur medizinischen Bildgebung, mit dem Ansteuersignal (270a) angesteuert wird (280).

13. Verfahren (100) nach einem der Ansprüche 1 bis 12, wobei ein Bild (1) einer Verkehrssituation mit Verkehrsteilnehmern, die sich auf einem oder mehreren Verkehrswegen bewegen, gewählt wird (105).

14. Verfahren (100) nach Anspruch 13, wobei die Attribute (5) zu einer oder mehreren der folgenden Kategorien (5a) gehören (105a):
• physische Infrastruktur;
• Verkehrs- und Nutzungsbeschränkungen;
• Objekte im Verkehrsraum; und
• Umgebungsbedingungen.

15. Computerprogramm, enthaltend maschinenlesbare Anweisungen, die, wenn sie auf einem oder mehreren Computern und/oder Compute-Instanzen ausgeführt werden, den oder die Computer und/oder Compute-Instanzen dazu veranlassen, das Verfahren (100) nach einem der Ansprüche 1 bis 14 auszuführen.

16. Maschinenlesbarer Datenträger und/oder Downloadprodukt mit dem Computerprogramm nach Anspruch 15.

17. Ein oder mehrere Computer und/oder Compute-Instanzen mit dem Computerprogramm nach Anspruch 15, und/oder mit dem maschinenlesbaren Datenträger und/oder Downloadprodukt nach Anspruch 16.
